# EUROPEAN PATENT APPLICATION

(11) **EP 1 873 007 A1**
(43) Date of publication of application: **02.01.2008**
(21) Application number: 06380186.4
(22) Date of filing: 29.06.2006
(51) Int. Cl.: B60N 2/30, B60N 2/46

(54) **Multifunction back seat for motor vehicles**

(71) Applicant: Espejo, Manuel Toril, 50180 Utebo (Zaragoza) (ES)
(72) Inventor: Espejo, Manuel Toril, 50180 Utebo (Zaragoza) (ES)
(74) Representative: Carpintero Lopez, Francisco

(57) **Abstract**

From a conventional seat provided with a seat base (1) and a back (2), conceived in principle to be used by adults, in an area of the back (2) corresponding to a passenger, is established a hollow (3) wherein a type of cover (4) which constitutes a child seat is conceivable, a child seat which, in inoperative position, maintains the conventional features of the seat as a whole, to be used by an adult, but when it is folded to the limit position defined by a pair of side straps (7), it constitutes a child seat, complementary and raised with respect to the seat base (1), whereon the child can be secured with the vehicle's safety belt (6) or any other means. This convertible child seat can also be obtained from an adjustable-height sector within the vehicle seat base (1), assisted by rigid tilting armrests (8,8') emerging from the corresponding sector of the back (2).

## Description

### OBJECT OF THE INVENTION

The present invention relates to a back seat, for motor vehicles, which has been conceived with a multifunction character, i.e. to be equally used by adults and/or older or younger children, being functionally adapted to the characteristics of each user, at each specific moment.

It is therefore a seat wherein the different parts thereof may be equally used by adults or by children of different ages, and consequently with different body size, which in principle offer the appearance and the features of a conventional back seat of any motor vehicle, but which at a certain moment could be transformed to transport in optimum conditions one, two or three children.

The invention is thus positioned in the field of the automobile industry, specifically in the manufacturing of seats for automobiles.

### BACKGROUND OF THE INVENTION

As is known, motor vehicles incorporate, in addition to the two front seats, a back seat, generally continuous, which is normally designed for two or three passengers, depending on the size and characteristics of the vehicle.

The vehicles leave the factory with their back seat provided with two or three safety belts, conceived and designed for adults, but the aforementioned current legal legislation also establishes that when children travel in a vehicle, not only should they occupy the back seat, but they should have special seats adapted to their body size and to the characteristics derived from their own immaturity.

More specifically, these child seats should be sufficiently raised with respect to the general level of the seats for adults, so that the vehicle's safety belt crosses the child's body in the suitable area, except in those cases where the complementary seat designed for the child incorporates non-detachable means of fastening to the vehicle seat and own means, substitutive of the safety belt, to secure the children's body.

There are numerous complementary seats on the market, commonly called child seats for vehicles, which adapt to the current regulation, but which have a problem which is basically centred on the following aspects:
- They must incorporate means that permits a solid fastening of said seats to the vehicle, and to avoid its movement in the event of the possible impact of the vehicle.
- Said means of fastening the seat to the vehicle seat must be feasible to be able to assemble the seat when its presence is necessary in the vehicle, and to be able to dismantle it in the opposing case.
- Typically, a family with children permanently has their corresponding seat or seats permanently assembled on the back seat of their vehicle, which means that said seat is made partially or totally unusable for its possible use by adults.
- The assembly and dismantling manoeuvres are slow and complicated in most cases, and the temporary elimination of one of said seats from the vehicle creates storage problems until its next use.

As a synthesis of the problem exposed, it can be said that conventional seats for children, within the vehicles, constitutes an expensive solution, which is uncomfortable and substantially limits the vehicle's features in certain circumstances.

### DESCRIPTION OF THE INVENTION

The seat for motor vehicles which the vehicle proposes, satisfactorily resolves the aforementioned problem in each and every one of the different aspects commented on.

To do this, and more particularly, said seat, which as we have previously stated is normally a back seat, with a configuration, dimensions and features in accordance with those of any conventional seat designed for adults, centres its characteristics on the fact that at least at one point of its back incorporates a large front hollow, designed to constitute, when appropriate, the back of a child seat, closing said hollow by a cover, which in its closed position establishes a perfect surface continuity with the general seat back, for its use by an adult, but in folded position, by a lower hinging line, becomes the seat base of a child seat.

Hollow and/or cover, in addition to being linked through said hinge, may also be linked by straps which stabilize it in its working position, or by any other appropriate means, and they may also have fastening means for the child which occupies the seat in question, or uses the safety belt for the vehicle.

From this basic structuring and as is evident, the conventional seat may have a single hollow, with its corresponding cover, on one of its side areas, or with two hollows with two covers, in its two side areas, depending on whether the need for the use of a single child seat or two child seats have been planned.

In any case and in accordance with the object of the invention, in an inoperative situation for the child seat or seats, the seat as a whole will offer as a whole an appearance and presentations identical to those of any back seat for conventional vehicles, whilst at any time and instantaneously, the folding of the cover or covers established in its back, turn said seat for adults into a seat for two children, or for a child and an adult.

In accordance with a variant of embodiment of the invention said stabilizing straps of the cover-seat may be replaced by a tilting limiting system established in the axis of said cover, and in replacement of said straps, collapsible armrests can be established on the vehicle back, which frame said hollow, these armrests fitting into the back in a similar way as the cover does, and being joined to said back by detachable ratchet mechanisms by a button positioned, for example, in the front end thereof, so that through this mechanism the armrests can vary their inclination and, consequently, their height in the operational area thereof, to adapt it to the demands of body size of the child that this vehicle seat is used for.

In accordance with another variant of embodiment of the invention said armrests of adjustable positioning, instead of framing said folding cover as a child seat, may remain opposite an adjustable-height sector of the vehicle seat, so that said seat sector may be distanced in greater or lesser height from the rest of the seat, depending on the child's body size, and consequently depending on the length of his/her legs to adopt a comfortable position at all times.

Optionally, said adjustable-height sector of the seat may also be inclination adjustable, which permits not only affecting the line of adaptability of the seat to the child's body size, but also varying the angle between the seat and the back, its inclination, until the point of being able to convert it into a recliner. In this regard, it has also been provided that the back corresponding to the vehicle seat is fragmented so that the area corresponding to the adjustable-height sector is also of adjustable inclination, to achieve the intended recliner effect.

The vehicle seat can incorporate one, two or three child seats, depending on the needs of each user, and in the case of incorporating a single child seat, this will preferably be positioned in the middle area of the vehicle seat, so that the concealable folding armrests or the folding seat can be used as armrests for the adults positioned in the side areas of the seat.

### DESCRIPTION OF THE DRAWINGS

To complement the description being made and with the object of helping towards a better understanding of the characteristics of the invention, in accordance with a preferred example of practical embodiment thereof, a set of figures is attached as an integral part of the description, wherein the following has been represented with an illustrative non-limitative character:
- Figure 1.-: Shows, according to a perspective schematic representation, a car seat made in accordance with the object of the present invention, wherein a child seat, which appears in inoperative position, is found.
- Figure 2.-: Shows a representation similar to that of the previous figure, wherein the child seat is being used.
- Figure 3.-: Shows a profile detailed section view of the assembly represented in the previous figure, of the child seat, in accordance with the A-B cut line of Figure 2.
- Figure 4.-: Shows a perspective schematic representation similar to that of Figure 2 wherein two variants of embodiment of the child seat integrated in the vehicle seat appear, one on the right part and the other on the left part of said seat.
- Figure 5.-: Shows a cross-section detail of the assembly represented in Figure 4 in accordance with the C-D cut line of said figure.
- Figure 6.-: Finally shows a side elevational schematic representation of one of the folding adjustable armrests.

### PREFERRED EMBODIMENT OF THE INVENTION

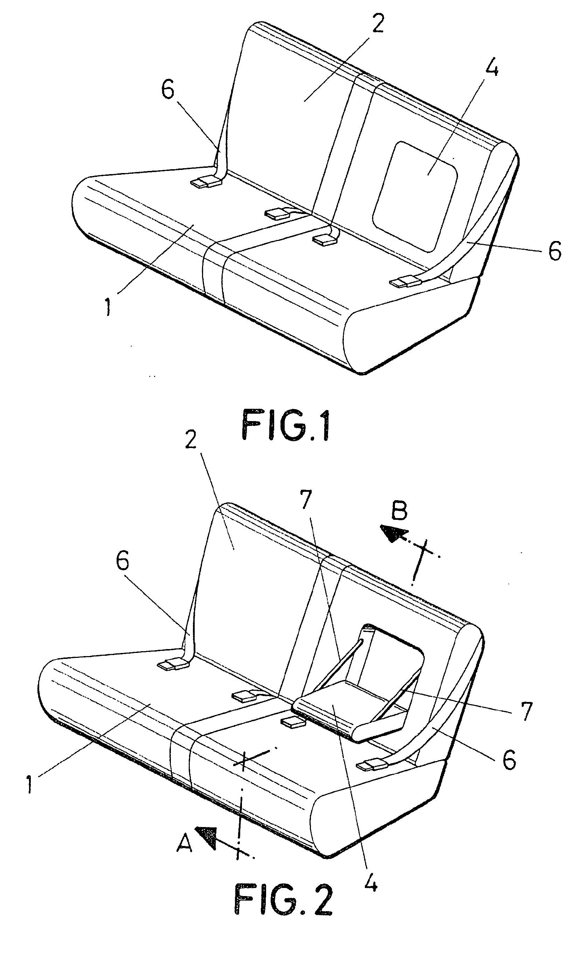

In light of said figures, particularly Figures 1 to 3, it can be observed that the car seat proposed by the invention is constituted, like any conventional back seat, by a duly padded body wherein a seat base (1), for two-or three persons, is established, in the example of practical embodiment of the figures for two persons, and a back (2), which may be fixed with respect to the seat area (1) or be folding, without this affecting the essence of the invention.

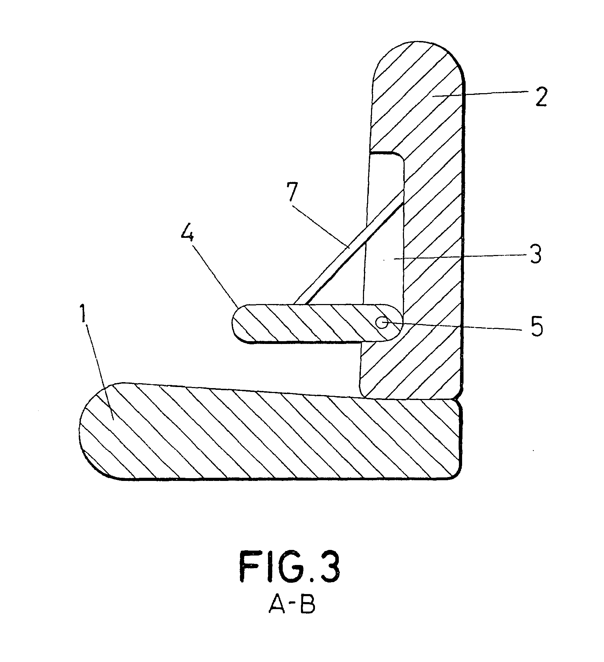

In accordance now with the invention, in at least one of the two halves of the seat, specifically in sector (2) thereof corresponding to the back, a large hollow (3) is established, open frontally, totally or largely occupied by a folding cover (4), specifically folding via a transversal and lower hinge or tilting axis (5), so that when said cover (4) is coupled in the housing (3), closing it, the back (2) has perfect surface continuity, as shown in figure 1, which permits the use of the seat as a whole by adults, in an absolutely identical manner to what occurs with a conventional seat, whilst when said cover (4) is folded to the horizontal position shown in Figures 2 and 3, it becomes the seat area for a child, which is markedly raised with respect to the seat area (1) for adults, the rear of the hollow (3) acting as back, and it is possible for said child to be secured thereto with the collaboration of the vehicle's classic safety belt (6).

Between the rear of the hollow (3) and the side edges of the folding cover (4) straps (7), either flexible or rigid and articulated, may be established, which on the one side act as stiffening means of the cover (4) in seat position, and on the other hand as side retaining means for the child.

The possibility has also been provided that said cover (4), instead of being materialized as an essentially flat body, adopts a U-shaped section, so that the seat area is framed by two side walls, which enable the child to fit better in the seat, and which may collaborate in an increase in the structural rigidity thereof, in which case, and as is evident, the hollow (3) of the back, for coupling the cover in inoperative position, will be provided with side projections of greater depth which are capable of tightly receiving therein these side walls of the cover or seat.

Said housing of the back of the vehicle, repeatedly cited as receptive element of the cover in inoperative position thereof, may also collaborate in a greater stability of the child, as his/her back fits into said hollow, but if the body size of said child may constitute any problems in this respect, such as, for example, a partial fitting of his/her body, which will make the seat uncomfortable, it may have an auxiliary cushion to fill said hollow when the cover (4) is used as a seat and which during the rest of the time will constitute an accessory that, such as a pillow, may be used by any passenger, to increase the vehicle's comfort.

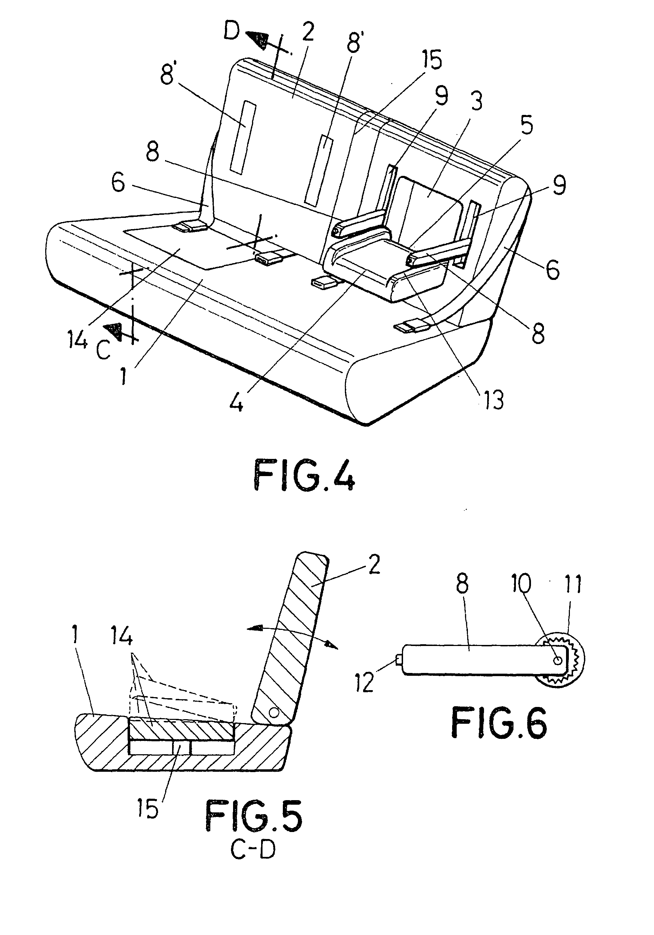

Optionally and as Figure 4 shows in its right part, the straps (7), obviously of flexible nature to permit their folding over on the interior of the housing (3) when the cover (4) fits therein, may be eliminated establishing another conventional limiter system which limits the folding of said cover (4), and in their place rigid armrests (8), concealable in respective hollows (9) of the back, independent from the cover (4), can be used, which they frame, each one of these armrests (8) having a tilting axis (10) assisted by a ratchet-type mechanism (11), actuated by a front button (12), which permits locking said armrest (8) in any chosen working position, i.e. with any inclination, which is equivalent to being able to regulate the height of the working area of said armrest (8), as has just been said.

In this right embodiment of Figure 4, it has further been provided that the cover (4) has side flanges (13), conveniently padded, which frame the operational area thereof collaborating in the side retention of the child.

Finally, and in accordance with another variant of embodiment of the invention, that shown on the left part of the seat of Figure 4, the cover (4) acting as seat may be substituted by an adjustable-height sector (14), adjustable in height by any conventional mechanism (15), as is schematically shown in Figure 5, in order to adapt the working level of said adjustable-height sector (14) in accordance with the specific needs of each case, having further provided that said sector (14) is also inclination adjustable, in which case a pair of folding concealable armrests (8'), similar or identical to the aforementioned armrest (8) will be positioned on the sector corresponding to the back (2).

It has finally been provided that parallel to the possibility of tilting of the seat sector (14), the back is also folding (2) in its corresponding sector, to be able to convert at certain moments the child seat in a recliner, for which purpose said back (2) of the vehicle seat will be fragmented by a cut plane (15) which mechanically separates it from the rest of said back, and also having conventional means for its folding, such as, for example, those used in the front seats of most vehicles.

## Claims

1. Multifunction back seat for motor vehicles, of the type structured by a body wherein a seat surface for two or more passengers is defined, as is a complementary back which can be stiffened to said seat or folding, with respect thereto, **characterized in that** it incorporates, integrated therein, at least one complementary seat (4-14) raised or height-adjustable with respect to the base seat surface, to be used by a child, said complementary seat being framed by side armrests (7-8-8'), concealable as are those of the complementary seat (4-14), so that said seat can equally be used by adults and/or children.

2. Multifunction back seat for motor vehicles, according to claim 1, **characterized in that** in the back (2) is established a large hollow (3) wherein is housed a cover (4), conveniently padded, joined with tilting to the back (1) via its lower edge, so that said cover (4) can remain level with the front surface of the back (2), when the seat is intended to be used by adults, whilst said cover (4) can be folded to a considerably horizontal position, converting it into a seat for children, when it should be used by them, for which purpose the tilting axis of said cover is conveniently raised with respect to the seat surface (1), so that the child's body can be properly crossed by the classic safety belt (6).

3. Multifunction back seat for motor vehicles, according to preceding claims, **characterized in that** between the hollow (3) of the back and the side and front areas of the cover (4), flexible or rigid and articulated straps (7) are established, conveniently located to act as side retaining means for the child's body and to stiffen the seat defined by the cover (4).

4. Multifunction back seat for motor vehicles, according to claim 1, **characterized in that** the child seat (14) is established as a sector of the vehicle seat (1), which is provided with conventional means (15) for height and inclination adjustment, having provided that the sector of the back (2) corresponding to the area of the seat wherein said sector (14) is positioned, said sector constituting the child seat, is also folding, delimited by a cut plane (15), in order to convert the child seat in a recliner.

5. Multifunction back seat for motor vehicles, according to claims 1 and 4, **characterized in that** in the back sector (2) of the vehicle opposite the adjustable-height sector (14) of the seat, is established a pair of rigid armrests (8') concealable within respective hollows (9) of the back, folding on a postero-inferior axis (10) and assisted by ratchet-type mechanisms (11) which, via a front button (12), allow regulating at will the inclination of said armrests (8').

6. Multifunction back seat for motor vehicles, according to preceding claims, **characterized in that** the folding cover (4) which constitutes the child seat concealable in the back (2), also incorporates rigid armrests (8), tilting and concealable in respective hollows (9) of the back, and equally provided with position adjustment means.
